# EUROPEAN PATENT SPECIFICATION

(11) **EP 0 896 692 B1**
(45) Date of publication and mention of the grant of the patent: **10.12.2003**
(21) Application number: 97919639.1
(22) Date of filing: 18.04.1997
(51) Int. Cl.: G02C 5/22

(54) **Elastic Hinge for Spectacles**
Federscharnier für Brillen
Charnière elastique pour lunettes

(30) Priority: 29.04.1996 IT TV960056
(43) Date of publication of application: 17.02.1999
(73) Proprietor: Montagner, Luciano, 31040 Segusino (IT)
(72) Inventor: Montagner, Luciano, 31040 Segusino (IT)
(74) Representative: D'Agostini, Giovanni, Dr.
(86) International application number: PCT/IT97/00088
(87) International publication number: WO 97/041482

(56) References cited:
- EP-A- 0 462 936
- EP-A- 0 679 920
- WO-A-96/29623
- DE-A- 2 948 113
- FR-A- 2 097 211

## Description

### Technical Field

This invention has for object a device, particularly reduced in size, for the elasticizing of an ear-piece for spectacles.

The innovation finds particular even if not exclusive application in the field of the spectacles production and of the metal small parts, not excluding their fittings.

### Background Art

Many frames for spectacles in prior art are known. Some of these, provide some devices, made close to the hinging, for allowing the elastic fastening to that part of the frame which is known as front face (WO 9629623A (IDEAL srl Montagner Luciano). Such function, obtained o n both sides of the spectacles, on one hand has the advantage of giving a better fitting, because if the ear-pieces exert a lower pressure on the temples, they are more easily endurable by most people, on the other hand they would result more adaptable to the different anatomical shapes of each subject. The firms of the field therefore, are since a long time thus oriented, with the main purpose of finding innovative and often improving solutions, both with regard to the functioning and mainly to the size, when compared to the pre-existing ones.

For example, a traditional elasticized ear-piece, that found a wide consent among the consumers, consists of the European patent application n.79400087.7, in which was described an elastic hinge for spectacles frame, essentially made up of a box, associated sideways to the ear-piece, for containing a tie-rod means coaxial to said box, and in which the end portion of the tie-rod is threaded, on which is screwed a bushing that ensures the positioning of a spring, while on the other side it is in abutment on the inside of a seat obtained in said box.

Again a system, conceptually based on the solution provided by the previous patent application disclosure, may consist of the Italian utility model n.181221, having for object an improved hinge for the articulation to a spectacles frame of an elastically openable ear-piece, in which it is provided a squared support inserted in the frame, on which it is inserted a support which is also squared that makes up a shoulder for the compression of a spring.

Finally, the Italian Patent n. 1 147 198, has for object an ear-piece with elastic hinging, in which the end of the ear-piece involves an axially holed small block within which is inserted an end for the connection of the hinge. Continuing with a reduced diameter, it supports inserted a sharp edge that is fixed inside the borehole while on the back of this latter is provided a tension helicoidal spring blocked at the end of the element by a threaded locknut. In such case it is possible the elastic opening of the ear-piece according to a certain angle by means of elastic yielding of the hinge-like connection.

The drawbacks noticed, in general common in the mentioned solutions, consist essentially of the excessive complexity of the utilized devices, which involved also a total oversizing of the device. Furthermore, notwithstanding they perform their functions perfectly, they determine many problems during the execution phases, on one side for what concerns the realization of the many precision components, on the other during their assembling, at the end influencing in considerable measure times and costs. Main purpose of the firms of the field, has been therefore the obtainment of the elasticizing devices of the ear-piece, that, even being more restrained in their size, offer a good functionality aiming at the same time to reduce the components, facilitating the assembling and diminishing the costs.

In the panorama of the recent devices, in line with the above mentioned principles, more or less effectively proposed on the market, there is a solution in which the articulation is all one with the sliding body for the containing of an elasticizing spring of the ear-piece. In more detail said body, has a square cross section, in which longitudinally has been removed some material from one part to the other, up to obtain opposite thin sheets which define the guide seat, making up the containing walls of a spring. On one side, the spring is placed in abutment on said seat, while on the other, it is fastened to a tooth which protrudes respect to the profile defined by the sliding body. Of the device considered, is part also a half-hull, opened on one side to be then associated to an ear-piece, and o n the inside of which is inserted the sliding body complete of the spring, turning the tooth on the longitudinal surface in which is obtained a stop reference. In a traction condition, the articulation obliges the body to slide on the inside of the half-hull maintaining the tooth constantly gripping along the base of said half-hull, up to compress the spring, therefore recalling elastically the articulation itself.

It is also very common the condition of fastening to said box preassembled on the end of the ear-piece, the elastic yielding group, essentially consisting of an articulation on which is screwed a tie-rod coaxial to a spring, fastened on the opposite side by a suitable bushing.

As a consequence, it is possible to notice at least two drawbacks, on one side, the need for an adequate size, which influences the weight of the structure, aesthetic not excluded, on the other, the use of screw means involves considerable assembling times, and therefore also considerable costs. For some ear-pieces, considered valuable, the system is still valid, as seen by their wide use, but for the others, directed to a wider public, the device would not be anymore convenient, because it should suit costs of the frame definitely more contained. The continuous research in the field, in recent times, was therefore directed towards alternative devices, designed for being promoted in a great amount and mainly able to obviate the use of the spring passing the box for the fastening of the elastic yielding group.

It is known also the French Patent n. 2 517 080. More in detail there is again described a hinge for spectacles frame, in which the metal core is all one with the articulation hinged to the front face. More in detail, the core is placed, passing from one side to the other, coaxial to a box, which near to one end provides an housing with abutment faces able to contain an helicoidal compression spring. This latter, on one side is positioned i n abutment on the annular edge obtained through a working internal to said box, on the other side is positioned on the end partially inserted inside the box and which covers the end of said core. The effect obtained by opening the era-piece, consists in visualizing the coaxial sliding of the end with respect to the box containing the device.

The drawbacks of this latter solution consist of the fact that are still required some complex components, which would make particularly difficult the manufacturing and assembling, not excluded some manufacturing costs which would affect considerably the finished product.

Always in prior art, are known other improved elastic yielding devices, which derive more or less from the previously described solutions, and in which are anyway observable some problems related to the large size of the articulation. Eg. see a two spring ear-piece hinging device disclosed in EP-A-0462936, having a double tie-rod spring guide means, surrounded by respective helical springs.

EP679920 discloses a spectacle elastic ear-piece hinging device, of the type having encased spring means in a box, to receive a tie-rod of a tie-rod spectacle hinging means, and wherein the end of said tie-rod has a tooth means to pull in compression said encased spring means in said box.

The fact of being particularly bulky, with regard to the elasticizing device, on one hand is unpleasant to see, on the other it is with no doubt limiting, because the ear-piece shape conditions its application. Other negative aspects, commonly noticeable in the mentioned solutions, regard the fact that it is no possible to combine the already finished device directly with the ear-piece, thus involving rather long assembling times. Finally, the traditional ear-pieces have a tie-rod which, because of its shape, allows an excessive slack, being inclined to a torsion, not much liked by the consumer.

Purpose of this invention is to obviate the mentioned drawbacks.

This and other purposes are reached by the present invention according to claim 1.

In such way, through a considerable creative contribution whose effect represents an immediate technical progress, are obtained many advantages. First of all it is obtained a substantial reduction of the size, mainly of the length, that besides being a considerable aesthetic advantage, allows the widening of the range of the tie-rods on which said device can be used. A second aspect, no less important, is the fact that because of the particular 'T" like shape of the tie-rod, those negative slacks are avoided, mainly torsion ones, very common in the linear single-tie rods, and which for this reason cause a higher wear of the components. This may cause a wrong stress of the parts, giving a feeling of precariousness to the object. For what concerns the productive aspect, some advantages consist of the fact that the device is completed before being combined with the ear-piece, and therefore, combined as finished to this same with a substantial reduction of manufacturing times and costs.

In conclusion, there will be a considerable functionality-price ratio, making possible the use of the elastic yielding device in a great amount of spectacles, thus widening the base of the possible consumers.

These and other advantages will appear from the following detailed description of preferred embodiments with the aid of the enclosed schematic drawings whose execution details are not to be considered as limitative but only as examples.

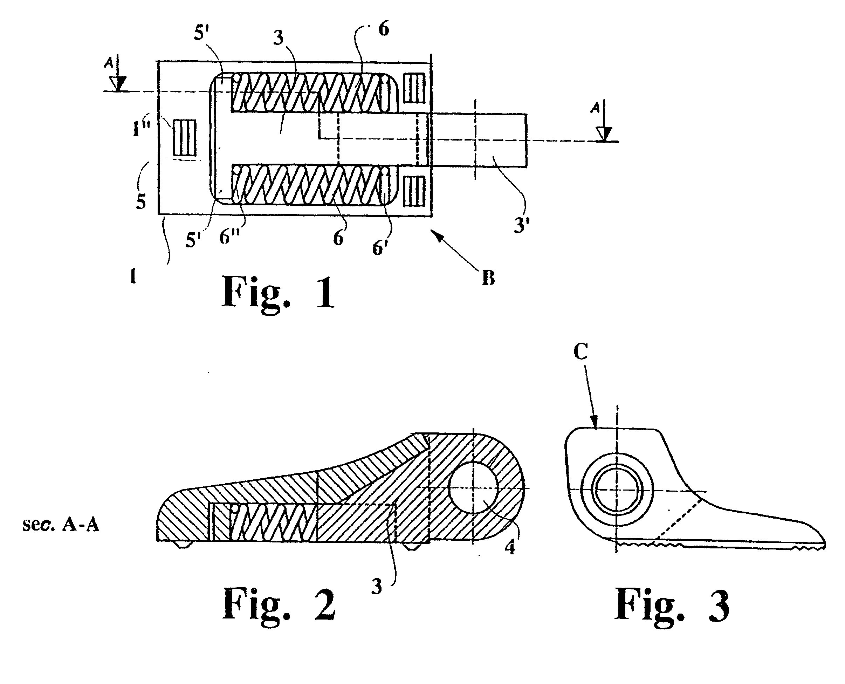

Figure 1, represents a total view and seen from the open side of the small box, of the main part of an elastic yielding device, possible to be combined with a corresponding tie-rod.
Figure 2., represents a longitudinal section view of the device of Figure 1., seen respectively along the axis A-A.,
Figure 3., is a top view of a small front face to be engaged on the spectacles frame of the device of the previous Figures.
Figure 4., represents a top and a total view of the elastic yielding device complete with the small front face.
Figure 5. represents always a top and partially section view, of the device of the previous Figures, in use on spectacles.
Figures 6, and 7., represent respectively a lower and a side view of the small box, as a part of the elastic yielding device.

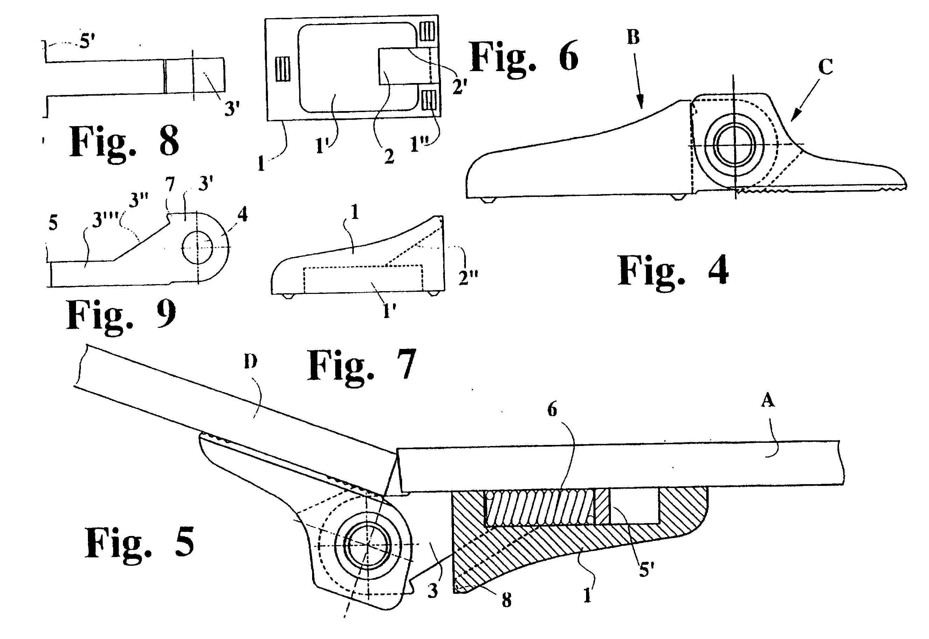

Finally, Figures 8. and 9., represent a view taken on the two sides of a tie-rod provided with a "T" like shaped free end.

Referring also to the figures, it can be seen that at least one ear-piece (A), particularly for spectacles, is elastically yielding for allowing, when worn, the opening of these same beyond the common opening axis, generally perpendicular, with respect to the frame (D). More in detail, each metal ear-piece (A) of the spectacles, provides as combined on a flat side, and in correspondence of one end, an elastic yielding device (B), which interacts with a device part (C), called small front face, and engaged in turn on the spectacles frame (D). The elastic yielding device (B) consists of a box (1), having rather contained size, open (1') on the fixing side on the corresponding tie-rod (A). Along the perimetrical edge of the box (1), always on the open side ( 1 '), are provided three coplanar teeth of exceeding material (1"), respectively two in the front part and only one in the back part. Said teeth (1"), during a following cycle of spot welding by electro-welding, melting with the part of the ear-piece (A) concerned, allow the definite and steady fastening of the box (1). A second characteristic, always of the box (1), is that of providing a longitudinal opening (2) which concerns its edge in correspondence of the front part, and which requires some perpendicular walls (2') respect to a surface with an oblique base (2"). The purpose of said longitudinal opening (2), is that of allowing the axial guide of said tie-rod (3), said tie-rod being i n part housed inside of the said box (1), and in part protruding from this latter through a hinge lobe (3') for being hinged to the small front face (C) of the spectacles (D). The hinge lobe (3') of the tie-rod (3) provides a rounded hinge lobe and a central hinge hole (4) for the hinging to the small front face (C), while on the opposite side, it is possible to see a progressive tapering, obtained from an oblique side (3"), which is a positive copy of the said longitudinal opening as a guide's shape (2) obtained in the box (1). Then always in the tie-rod (3), it has a straight shape (3"") which joins the hinge lobe (3') on one side and with at the opposed free end a transversal head (5). This latter obtained monolithically from the tie-rod (3), provides the construction of two wings, in particular opposed teeth (5') and perpendicular to the section (3"') defining two lateral abutment internal faces that is allowing the division of the box into two sections, each of which comprises an helical spring (6). Even more in detail, the springs (6) concern both sides of the tie-rod (3), and are placed with one end (6') in abutment on the bottom of the front end inside surface of the box (1), while with the opposite end (6") are in abutment on the corresponding wings or teeth (5') of said tie-rod (3-5).

For allowing, in a rest position, to keep the springs (6) slightly functioning, avoiding any slack mainly relative to the tie-rod (3), just before the beginning of the oblique side (3") of the tie-rod (3), is provided a hook (7). The function of this latter, in a static condition of the device, that is with the springs (6) extended, is the fact that it stops on the abutment (8) provided, in the manufacturing of the box (1), in correspondence of the guide entrance (2). During the assembling phase, it is therefore possible inserting into the box (1), first the tie-rod (3) and then the springs (6), or also together, which slightly forcing in the respective abutment faces will result slightly pre-charged.

By exerting an axial traction of the tie-rod (3), a condition which is equivalent to the opening beyond the common opening angle of the ear-piece (A), is obtained a compression of both springs (6), which thus contrast its action. As consequence, the ear-piece (A) hinged to a corresponding front face (C), yields elastically, respect to the front part of the frame (D), pulling the tie-rod and at the same time compressing the springs (6), pushed internally against the shoulder of the front end inside surface of the box (1).

Thus, the natural extension of the springs (6), allows to the spectacles, first to be properly and softly worn by modulating the pressure exerted by the ear-pieces on the temples, and then, when no more used, the return to a static condition.

## Claims

1. An elastic spectacle ear-piece hinging device, having a box, spring means (6) encased in said box (1) and abutting the front end inside surface of said box, a tie-rod (3) received in said box and being arranged to be hinged at its front end to a spectacle front frame hinging means (3-7-4) and wherein said tie-rod (3) has at its rear end a tooth end means to compress when pulled said encased spring means (6) in said box (1), **characterized in that**
- the shape of said tooth end (5) of the said tie-rod (3) is similar to the shape of a "T" thus realizing two opposed teeth (5') and wherein
- said encased spring means are two parallel helical springs (6) which are placed one at one side and one at the other of said tie-rod (3),
- such that each of said two opposed teeth (5') abuts one of said two helical springs (6).

2. A spectacle elastic ear-piece hinging device, according to claim 1 **characterized in that** said box (1), is open (1') on the fixing side on the corresponding ear-piece (A), along whose perimetrical edge, are provided some points of exceeding material (1"), allowing after insertion of the said tie-rod (3-5) and spring means (6), a spot melting by electro-melting, on the said ear-piece (A).

3. A spectacle elastic ear-piece hinging device, according to any of the preceding claims, **characterized in that** at the front end of the said box (1), is provided a longitudinal opening provided with walls (2') perpendicular to an oblique base surface (2").

4. A spectacle elastic ear-piece hinging device, according to the preceding claim, **characterized in that** the said longitudinal opening (2), is an axial guide of said tie-rod (3), said tie-rod being partly housed inside of the said box (1), and partly protruding from the same by a hinge lobe (3') arranged to be hinged to the front frame (C) of the spectacles (D).

5. A spectacle elastic ear-piece hinging device, according to the preceding claim, **characterized in that** said tie-rod (3), from the said hinge lobe (3'), has a progressive tapering given by an oblique section (3"), which is the positive copy of the shape of the said longitudinal opening (2) realizing a guide means of it, obtained inside the said box (1).

6. A spectacle elastic ear-piece hinging device, according to claim 5, **characterized in that** said tie-rod (3), has a straight shape (3"') between said intermediate oblique section (3"), and said tooth end (5) in which said helical springs are lodged (6).

7. A spectacle elastic ear-piece hinging device, according to any of the preceding claims, **characterized in that** said helical springs (6), are slightly pre-charged, and the said tie-rod (3), just before the beginning of the said oblique section (3") has a hook (7) which in a static condition of the device, that is with the extended springs (6), stops on an abutment (8), provided in said box (1), in correspondence of the said longitudinal opening (2).

8. Spectacles having a front frame, ear pieces and elastic ear-pieces hinging devices according to any of preceding claims.

## Patentansprüche

1. Elastische Brillenohrenbügel-Gelenkverbindungs-Vorrichtung, mit einem Kasten, einer Feder (6), die in besagtem Kasten (1) enthalten ist und die das vordere Ende in die Oberfläche von besagtem Kasten stößt, eine Zugstange (3) die in besagtem Kasten enthalten ist und angebracht ist, um an ihrem vorderen Ende mit einem Brillenvorderseitenrahmen-Gelenkverbindungsmittel (3 - 7 - 4) gelenkig verbunden zu werden, und wobei besagte Zugstange (3) an ihrem Hinterende ein Zahnende aufweist, um besagte ummantelte Feder (6) in besagtem Kasten (1) zu komprimieren, wenn sie gezogen wird, **gekennzeichnet dadurch, dass**
- die Form von besagtem Zahnende (5) der besagten Zugstange (3) ähnlich der Form eines "T" ist, so dass zwei entgegengesetzte Zähne (5') entstehen, und wobei
- besagte ummantelte Federn zwei parallele Schraubenfedern (6) sind, von denen die eine an einer Seite gelegen sind und die andere an der anderen von besagter Zugstange (3),
- so dass jede von den beiden entgegengesetzten Zähnen (5') gegen eine der beiden Schraubenfedern (6) anschlägt.

2. Elastische Brillenohrenbügel-Gelenkverbindungs-Vorrichtung für Brille nach Anspruch 1, **gekennzeichnet dadurch, dass** besagter Kasten (1) an der Befestigungsseite auf der entsprechenden Ohrenbügel (A) offen (1') ist, entlang deren Umfangskante einige Punkte Überschussmaterial (1 ') vorgesehen sind, so dass nach Einfügung der besagten Zugstange (3-5) und Federn (6) Punktschmelzen durch Elektroschmelzen auf dem besagten Ohrenbügel (A) möglich ist.

3. Elastische Brillenohrenbügel-Gelenkverbindungs-Vorrichtung für Brille nach einem beliebigen der vorherigen Patentansprüche, **gekennzeichnet dadurch, dass** am vorderen Ende des besagten Kastens (1) eine Längsöffnung mit Wänden ( 2' ) senkrecht zu einer schrägen Basisoberfläche (2 ') vorgesehen ist.

4. Elastische Brillenohrenbügel-Gelenkverbindungs-Vorrichtung für Brille nach dem vorigen Anspruch, **gekennzeichnet dadurch, dass** die besagte Längsöffnung ( 2 ) eine axiale Führung von besagter Zugstange (3) ist, wobei besagte Zugstange teilweise in dem besagten Kasten (1) untergebracht ist, und teilweise daraus vorspringt durch einen Gelenknocken (3'), um mit dem Vorderseitenrahmen (C) der Brille gelenkig verbunden zu werden (D).

5. Elastische Brillenohrenbügel-Gelenkverbindungs-Vorrichtung für Brille nach dem vorigen Anspruch, **gekennzeichnet dadurch, dass** besagte Zugstange (3), von dem besagten Gelenknocken (3'), eine fortschreitende Verengung aufweist, gegeben durch einen schrägen Querschnitt (3 '), der die positive Kopie der Form der Längsöffnung (2) ist, die ein Führungsmittel dafür darstellt, das in dem Kasten (1) erhalten ist.

6. Elastische Brillenohrenbügel-Gelenkverbindungs-Vorrichtung für Brille nach Anspruch 5, **gekennzeichnet dadurch, dass** besagte Zugstange (3) zwischen besagtem schrägen Zwischenquerschnitt (3 '), und besagtem Zahnende (5), in dem die Schraubenfedern (6) untergebracht sind, eine gerade Form (3") aufweist.

7. Elastische Brillenohrenbügel-Gelenkverbindungs-Vorrichtung für Brille nach einem beliebigen der vorherigen Patentansprüche, **gekennzeichnet dadurch, dass** besagte Schraubenfedern (6) leicht vorgespannt sind, und die besagte Zugstange (3), kurz vor dem Beginn des schrägen Querschnitts (3 ') einen Haken ( 7 ) aufweist, der im statischen Zustand der Vorrichtung, das heißt mit erweiterten Federn (6), auf einem Anschlag (8) in besagtem Kasten (1) an der besagten Längsöffnung (2) anschlägt.

8. Brille mit einem Vorderseitenrahmen, Ohrenbügeln und elastischen Ohrenbügel-Getenkverbindungs-Vorrichtungen nach einem beliebigen der vorigen Patentansprüche.

## Revendications

1. Un dispositif d'articulation élastique de branche de lunette, ayant une boîte, des ressorts (6) emboîtés dans ladite boîte (1) et, aboutant l'extrémité antérieure dans la surface de ladite boîte, un tirant (3) reçu dans ladite boîte et étant prédisposé pour être articulé à son extrémité antérieure à un moyen d'articulation de monture frontale de lunette (3-7-4) et dans lequel ledit tirant (3) a à son extrémité postérieure une dent finale pour comprimer, quand ils sont tirés, lesdits ressorts emboîtés (6) dans ladite boîte (1), **caractérisé en ce que**
- la forme de ladite dent finale (5) dudit tirant (3) est similaire à la forme d'un " T " réalisant ainsi deux dents opposées (5') et dans lesquelles
- lesdits ressorts emboîtés sont deux ressorts hélicoïdaux parallèles (6) qui sont placés l'un d'un côté et l'autre de l'autre côté dudit tirant (3),
- de manière à ce que chacune desdites deux dents opposées (5') aboute l'un desdits deux ressorts hélicoïdaux (6).

2. Un dispositif d'articulation élastique de branche de lunette, selon la revendication 1 **caractérisé en ce que** ladite boîte (1) est ouverte (1') sur le côté de fixation sur la branche de lunette correspondant (A), dont tout au long du bord périmétral, sont pourvus quelques points de matériau excédant (1"), permettant après insertion dudit tirant (3-5) et des ressorts (6), une fusion de point par électro-fusion, sur ladite branche de lunette (A).

3. Un dispositif d'articulation élastique de branche de lunette, selon l'une quelconque des revendications précédentes, **caractérisé en ce que**, à l'extrémité antérieure de ladite boîte (1), est pourvue une ouverture longitudinale pourvue de murs (2') perpendiculaire à une surface de base oblique (2").

4. Un dispositif d'articulation élastique de branche de lunette, selon la revendication précédente, **caractérisé en ce que** ladite ouverture longitudinale (2) est un guide axial dudit tirant (3), ledit tirant étant logé partiellement à l'intérieur de ladite boîte (1) et saillant partiellement de celle-ci par un lobe de charnière (3') prédisposé pour être articulé à la structure frontale (C) des lunettes (D).

5. Un dispositif d'articulation élastique de branche de lunette, selon la revendication précédente, **caractérisé en ce que** ledit tirant (3) dudit lobe (3') diminue progressivement par une section oblique (3"), qui est la copie positive de la forme de ladite ouverture longitudinale (2) réalisant un guidage de celle-ci, obtenu dans ladite boîte (1).

6. Un dispositif d'articulation élastique de branche de lunette, selon la revendication 5, **caractérisé en ce que** ledit tirant (3) a une forme droite (3"') entre ladite section oblique intermédiaire (3") et ladite dent finale (5) dans laquelle lesdits ressorts hélicoïdaux sont logés (6).

7. Un dispositif d'articulation élastique de branche de lunette, selon l'une quelconque des revendications précédentes, **caractérisé en ce que** lesdits ressorts hélicoïdaux (6) sont légèrement pré-chargés, et ledit tirant (3), juste avant le début de ladite section oblique (3"), a un crochet (7) qui, dans une condition statique du dispositif, c'est-à-dire avec les ressorts étendus (6), arrête sur une butée (8), pourvue dans ladite boîte (1), en correspondance de ladite ouverture longitudinale (2).

8. Lunettes ayant une monture frontale, branches de lunettes et dispositifs d'articulation élastique pour branches de lunettes selon l'une quelconque des revendications précédentes.
